(19) Europäisches Patentamt
European Patent Office
Office européen des brevets

(11) **EP 1 888 384 B1**

(12) **EUROPÄISCHE PATENTSCHRIFT**

(45) Veröffentlichungstag und Bekanntmachung des Hinweises auf die Patenterteilung:
**04.08.2010 Patentblatt 2010/31**

(21) Anmeldenummer: **06743129.6**

(22) Anmeldetag: **08.06.2006**

(51) Int Cl.:
**B60T 8/40** *(2006.01)*

(86) Internationale Anmeldenummer:
**PCT/EP2006/005489**

(87) Internationale Veröffentlichungsnummer:
**WO 2006/131365 (14.12.2006 Gazette 2006/50)**

(54) **BREMSANLAGE FÜR EIN LANDFAHRZEUG MIT ANTIBLOCKIERREGELUNG UND EIN STEUERVERFAHREN DAFÜR**

ANTILOCK BRAKE SYSTEM FOR A LAND CRAFT AND CONTROL METHOD THEREFOR

SYSTEME DE FREINAGE D'UN VEHICULE ROUTIER AYANT UNE REGULATION ANTIBLOCAGE ET UN PROCEDE DE COMMANDE POUR CELUI

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **09.06.2005 DE 102005026738**

(43) Veröffentlichungstag der Anmeldung:
**20.02.2008 Patentblatt 2008/08**

(73) Patentinhaber: **Lucas Automotive GmbH
56070 Koblenz (DE)**

(72) Erfinder:
• **KEEN, Steven
56068 Koblenz (DE)**

• **KNECHTGES, Josef
56727 Mayen (DE)**
• **SCHWARZ, Michael
56070 Koblenz (DE)**
• **VALDER, Thorsten
56410 Montabaur (DE)**

(74) Vertreter: **Schmidt, Steffen
Wuesthoff & Wuesthoff
Patentanwälte
Schweigerstrasse 2
81541 München (DE)**

(56) Entgegenhaltungen:
**WO-A-91/05686      WO-A-03/082645
WO-A-2006/029979      DE-A1- 3 731 603**

## Beschreibung

### Gebiet der Erfindung

Die vorliegende Erfindung betrifft in Allgemeinen Bremsanlagen für Landfahrzeuge und insbesondere eine Bremsanlage mit Antiblockierregelung.

### Hintergrund der Erfindung

Hydraulische Bremsanlagen für Landfahrzeuge können dazu eingerichtet sein, neben vom Fahrer gesteuerten Bremsvorgängen, automatische Bremsvorgänge durchzuführen, die unabhängig von einer Betätigung der Bremsanlage durch den Fahrer erfolgen. Beispiele für solche automatischen Bremsvorgänge umfassen Bremsvorgänge zur Antriebsschlupfregelung (ASR), die ein Durchdrehen einzelner Räder beim Anfahrvorgang durch gezieltes Abbremsen der entsprechenden Räder verhindern, zur Fahrdynamikregelung, bei der das Fahrzeugverhalten in Grenzbereichen durch gezieltes Abbremsen einzelner Räder gesteuert wird, und zur adaptiven Geschwindigkeitsregelung, bei der beispielsweise durch automatisches Abbremsen des Fahrzeugs vorgegebene Geschwindigkeiten und/oder Abstände zu vorausfahrenden Fahrzeugen eingehalten werden.

Sowohl bei vom Fahrer gesteuerten Bremsvorgängen als auch bei automatisch durchgeführten Bremsvorgänge ist es üblich, eine Antiblockierregelung vorzusehen, um ein Blockieren von Rädern während eines Bremsvorgangs zu verhindern. Bei einer Antiblockierregelung wird der Bremsdruck in einer Radbremse einer hydraulischen Bremsanlage moduliert, wenn ein Blockieren oder eine Blockierneigung eines entsprechenden Rads festgestellt wird. Die Bremsdruckmodulation erfolgt durch in zeitlicher Folge wechselnde Druckaufbau-, Druckhalte- und Druckabbauphasen.

Ein Problem dabei besteht darin, dass bei vom Fahrer gesteuerten Bremsvorgängen Hydraulikfluid in einem Hauptzylinder einer hydraulischen Bremsanlage im Allgemeinen bei Durchführung einer Antiblockierregelung in Schwingung versetzt wird. Dies kann zu störenden Geräuschen und zu den Schwingungen entsprechenden, pulsierenden Bewegungen eines zum Betätigen des Hauptzylinders vorgesehenen Bremspedals führen.

WO 03/082645 A1 offenbart ein Verfahren zur Verbesserung des Regelverhaltens von Kraftfahrzeugregelungssystemen, wie z.B. ABS oder ESP. Dabei nimmt ein Niederdruckspeicher zumindest zum Teil das aus den Radbremsen abgeleitet Druckmittel auf. Von den Niederdruckspeichern fördern Hydraulikpumpen das Druckmittel zurück in einen Hauptzylinder. In Abhängigkeit von gemessenen, errechneten oder geschätzten Druckwerten werden Werte gewonnen mit denen das Förderverhalten oder das Fördervolumen der Hydraulikpumpen geregelt wird. Zusätzlich werden zur Ansteuerung der Hydraulikpumpen die Radbeschleunigung oder der Schlupfverlauf der Räder berücksichtigt. Bei einer Druckabbauphase wird das Druckmittel in den Niederdruckspeichern zwischengespeichert und solange keine Rückförderung des Druckmittels in den Hauptzylinder vorgenommen, bis entweder eine Druckaufbauphase einsetzt oder ein kritischer Füllstand des Niederdruckspeichers eine Ansteuerung der Hydraulikpumpen aus Sicherheitsgründen erforderlich macht. Dadurch wird eine Bilanzierung des Bedarfsvolumenstroms und des Fördervolumenstroms und somit eine Verringerung von Vibrationen des Bremspedals erreicht. Bei einer Druckaufbauphase wird das Druckmittel aus dem Niederdruckspeicher so in den Hauptzylinder zurückgefördert, dass der benötigte Bedarfsvolumenstrom der Radbremse weitestgehend von dem Fördervolumenstrom der Hydraulikpumpe bereitgestellt wird. Dadurch sollen möglichst geringe Pedalbewegungen aufgrund von Volumenstromdifferenzen erfolgen. Der Bedarfsvolumenstrom der Radbremse ist in Form von Volumenkennlinien abgelegt. Die Hydraulikpumpe wird abhängig von diesen Volumenkennlinien angesteuert.

WO 91/05686 beschreibt eine blockiergeschützte, hydraulische Bremsanlage, die so eingerichtet ist, dass das Kraft-Wege-Verhältnis bei einer blockiergeschützten Bremsung dem einer konventionellen Bremsung entspricht. Ferner ist die Bremsanlage so eingerichtet, dass ein elektronisches Pumpenregelgerät eine dem Fördervolumen der Pumpe entsprechenden Stellgröße derart bestimmt, dass jedem Druck in der Arbeitskammer eine Position des Arbeitskolbens zugeordnet wird.

DE 37 31 603 A1 beschreibt eine Bremsanlage mit einer Vorrichtung zur Antiblockierregelung. Es wird vorgeschlagen, den Kolben des Hauptzylinders in einer Soll-Position zu positionieren. Die Ist-Position des Kolbens wird durch eine Sensorvorrichtung ermittelt, und das Fördervolumen der Pumpe wird so eingeregelt, dass der Kolben des Hauptzylinders die Soll-Position einnimmt. Dabei ist die Pumpe direkt mit dem Druckraum des Hauptzylinders verbunden. Dabei wird unabhängig von dem Druckmittelvolumen das durch den Antiblockierdruckmodulator fließt das Pedal in einer vorbestimmten Soll-Position gehalten.

### Aufgabe der Erfindung

Aufgabe der Erfindung ist es, Störeinflüsse aufgrund einer von einer hydraulischen Bremsanlage durchgeführten Antiblockierregelung wenigstens teilweise zu kompensieren.

### Kurzbeschreibung der Erfindung

Zur Lösung der obigen Aufgabe stellt die vorliegende Erfindung eine Bremsanlage und ein Verfahren gemäß den unabhängigen Ansprüchen bereit.

Die erfindungsgemäße hydraulische Bremsanlage ist für ein Landfahrzeug vorgesehen und umfasst eine Steuerung, die eingerichtet ist, wenigstens Steuersignale zum Betrieb der Bremsanlage für eine Antiblokkierregelung bereitzustellen.

Hier und im Folgenden ist unter "eingerichtet" zu verstehen, dass die Steuerung wenigstens strukturell ausgeführt ist, um die jeweils angegebenen technischen funktionalen Merkmale bereitzustellen. Darüber hinaus kann die Steuerung auch programmiert sein, um die jeweils angegebenen technischen funktionalen Merkmale bereitzustellen, beispielsweise unter Verwendung von Softwarecode oder Computerprogrammen. So ist es vorgesehen, dass die Funktionen der Steuerung durch eine entsprechende Hardwarestruktur (z. B. ASIC) bereitgestellt werden. Die Steuerung kann auch so ausgeführt sein, dass sie eine auch allgemein verwendbare Hardwarestruktur aufweist, die in Verbindung mit einer entsprechenden Programmierung (z. B. fest implementierter Softwarecode, auf einem computerlesbaren Speichermedium bereitgestelltes Computerprogramm, zum Betrieb herunterladbarer Softwarecode oder Computerprogramm) die technischen funktionalen Merkmale der Steuerung bereitstellt.

Ferner umfasst die erfindungsgemäße Bremsanlage einen Hauptzylinder, um unter Steuerung eines Fahrers bzw. durch Betätigung eines Bremspedals, Bremsdruck zu erzeugen. Ferner ist ein erster Bremskreis mit wenigstens einer Radbremse und einer ersten steuerbaren Pumpe vorgesehen, um der wenigstens einen Radbremse des ersten Bremskreises Hydraulikfluid gesteuert zuführen zu können. Die Bremsanlage weist des weiteren eine erste Fluidverbindung zwischen der Ausgangsseite der ersten Pumpe und dem Hauptzylinder auf.

Erfindungsgemäß ist die Steuerung eingerichtet, eine erste Hydraulikfluidmenge zu ermitteln, die für von der ersten Pumpe während einer Druckaufbauphase bei Antiblockierregelung gefördertes Hydraulikfluid eine Begrenzung derart darstellt, dass ein Fluss von Hydraulikfluid über die erste Fluidverbindung von der Ausgangsseite der ersten Pumpe zu dem Hauptzylinder im Wesentlichen verhindert.

Zusätzlich umfasst die Bremsanlage einen zweiten Bremskreis mit wenigstens einer Radbremse und einer zweiten steuerbaren Pumpe zur gesteuerten Zufuhr von Hydraulikfluid zu der wenigstens einen Radbremse des zweiten Bremskreises und eine zweite Fluidverbindung zwischen der Ausgangsseite der zweiten Pumpe und dem Hauptzylinder. Dabei ist es vorgesehen, dass die Steuerung eine zweite Hydraulikfluidmenge zu ermitteln vermag, die die Hydraulikfluidfördermenge der zweiten Pumpe während einer Druckaufbauphase bei Antiblockierregelung so begrenzt, dass ein Fluss von Hydraulikfluid über die zweite Fluidverbindung von der Ausgangsseite der zweiten Pumpe zu dem Hauptzylinder im Wesentlichen verhindert wird.

Aus den für den ersten und zweiten Bremskreis ermittelten Hydraulikfluidmengen kann die Steuerung auf deren Grundlage eine gemeinsame Hydraulikfluidmenge ermitteln, die, wenn die Fördermenge jeder Pumpen der Bremskreise jeweils auf die gemeinsame Hydraulikfluidmenge begrenzt ist, wenigstens für einen der Bremskreise einen Fluss von Hydraulikfluid über die entsprechende Fluidverbindung von der Ausgangsseite der entsprechenden Pumpe zu dem Hauptzylinder im Wesentlichen verhindert.

Dabei ist es vorgesehen, dass die gemeinsame Hydraulikfluidmenge dem Mittelwert der ersten und zweiten Hydraulikfluidmengen entspricht.

Bei Verwendung einer gemeinsamen Hydraulikfluidmenge kann die Bremsanlage einen Motor aufweisen, der zum Antrieb beider Pumpen dem Bremskreis dient. Dabei kann die Steuerung den Motor so einstellen, dass die Fördermenge jeder Pumpe auf die gemeinsame Hydraulikfluidmenge begrenzt wird.

Vorzugsweise ist die Steuerung ferner dazu eingerichtet, um während einer Druckhaltephase und/oder einer Druckabbauphase bei Antiblockierregelung eine Zufuhr von Hydraulikfluid unter Verwendung der Pumpe(n) zu der bzw. den entsprechenden Radbremsen zu verhindern. Insbesondere ist es hier vorgesehen, dass die Steuerung in solchen Phasen einer Antiblockierregelung die Pumpe(n) abstellt.

Das erfindungsgemäße Verfahren ist zur Steuerung einer hydraulischen Bremsanlage eines Landfahrzeugs vorgesehen, die eine Antiblockierregelung erlaubt und einen Hauptzylinder zum Erzeugen von Bremsdruck unter Steuerung eines Fahrers und einen ersten Bremskreis mit wenigstens einer Radbremse umfasst. Bei dem erfindungsgemäßen Verfahren wird, wenn während eines von dem Fahrer gesteuerten Bremsvorgangs eine Antiblockierregelung durchgeführt wird, die oben genannte erste Hydraulikfluidmenge ermittelt.

Bei Verwendung des erfindungsgemäßen Verfahrens zum Steuern einer Bremsanlage mit einem zweiten wenigstens eine Radbremse umfassenden Bremskreis wird die oben genannte zweite Hydraulikfluidmenge ermittelt.

Ferner ist es vorgesehen, dass bezüglich wenigstens eines Bremskreises dessen Radbremse(n) während einer Druckaufbauphase die erste bzw. zweite Hydraulikfluidmenge zugeführt wird.

Alternativ ist es vorgesehen, auf der Grundlage der ersten und zweiten Hydraulikfluidmengen eine gemeinsame Hydraulikfluidmenge zu ermitteln, die jeweils der wenigstens einen Radbremse der Bremskreise zugeführt werden kann.

**Kurzbeschreibung der Zeichnungen**

In der folgenden Beschreibung bevorzugter Ausführungsformen wird auf die beigefügten Figuren Bezug genommen, von denen zeigen:

Fig. 1    eine schematische Darstellung einer erfindungsgemäßen Bremsanlage in einem Betriebszustand für wenigstens teilweise fahrer-

gesteuerte Bremsvorgänge, und

Fig. 2 eine schematische Darstellung der Bremsanlage von Fig. 1 in einem Betriebszustand mit Antiblockierregelung.

**Beschreibung bevorzugten Ausführungsformen**

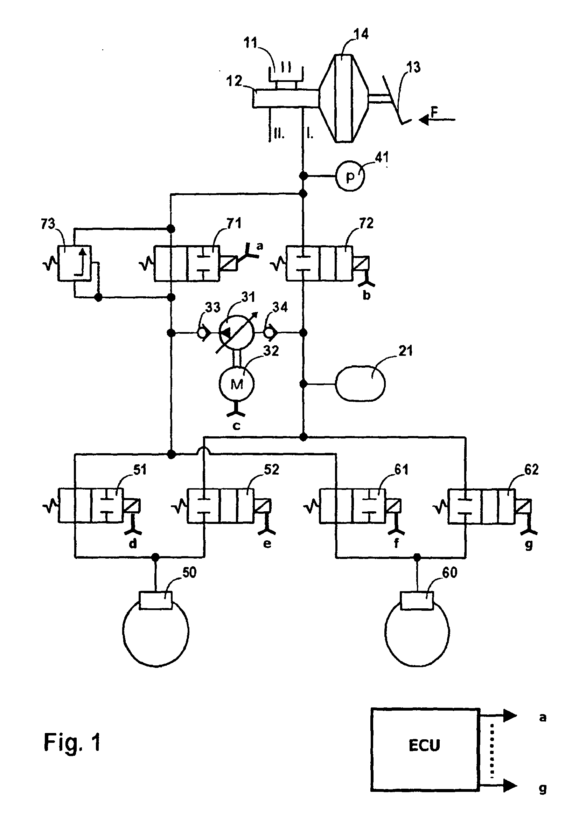

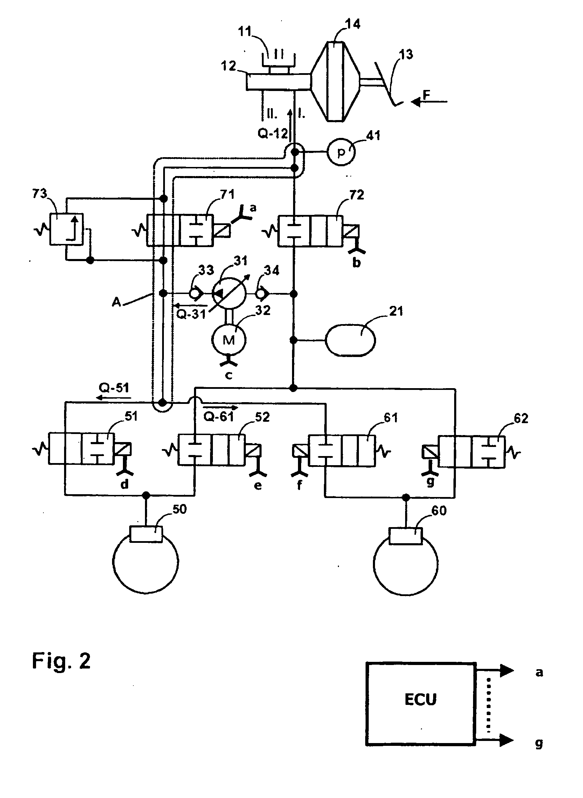

Fig. 1 und 2 zeigen schematische Darstellungen von Bremsanlagen. Die folgenden Ausführungen unter Bezugnahme auf die Ausführungsform von Fig. 1 gelten entsprechend auch für die Ausführungsform von Fig. 2

Die Bremsanlage arbeitet mittels Hydraulikfluid, die zum Teil in einem Behälter 11 bevorratet ist. Zum Erzeugen von Bremsdruck, der durch unter Druck setzen des Hydraulikfluids entsteht, dient ein Hauptzylinder 12, der vom Fahrer durch ein Pedal 13 betätigt werden kann. Wie in den Figuren dargestellt, kann optional ein zwischen dem Hauptzylinder 12 und dem Pedal 13 angeordneter Bremskraftverstärker 14 vorgesehen sein, um eine vom Fahrer eingeleitete Kraft F - vorzugsweise pneumatisch oder hydraulisch - zu verstärken.

Von dem Hauptzylinder 12 ausgehend werden ein erster und zweiter Bremskreis I., II. versorgt, wobei jeder Bremskreis zwei Radbremsen umfasst. Je nachdem, welche Radbremsen des Fahrzeugs von welchem Bremskreis umfasst werden, ergibt sich eine Aufteilung zwischen Vorder- und Hinterachse, wobei ein Bremskreis Radbremsen der Vorderachse und der andere Bremskreis Radbremsen der Hinterachse umfassen kann oder ein Bremskreis die Radbremse eines Vorderrades und die Radbremse des diagonal gegenüberliegenden Hinterrades und der andere Bremskreis die Radbremsen des anderen Vorderrades und des anderen Hinterrades umfassen kann.

Im Folgenden wird davon ausgegangen, dass die Bremskreise I. und II. im Wesentlichen identisch aufgebaut sind. Daher ist nur der Bremskreis I. im Detail gezeigt. Die folgenden Ausführungen unter Bezugnahme auf den Bremskreis I. gelten entsprechend für den Bremskreis II.

Der Bremskreis I. umfasst zwei Radbremsen 50 und 60. Zum Steuern von Bremsdruckverläufen in den Radbremsen 50 und 60 sind eine Ventile 51 und 52 umfassende erste Ventilanordnung und eine Ventile 61 und 62 umfassende zweite Ventilanordnung vorgesehen.

Die Ventile 51, 52, 61 und 62 sind hier als durch Elektromagnete betätigbare 2/2-Wegeventile dargestellt.

Der Bremskreis I. umfasst eine Ventile 71, 72 und 73 aufweisende Ventileinrichtung. Die Ventile 71 und 72 sind hier als durch Elektromagnete betätigbare 2/2-Wegeventile dargestellt.

Fig. 1 zeigt die Ventile 51, 61 und 71 jeweils in einem geöffneten Betriebszustand oder Durchflussstellung, während die Ventile 52, 62 und 72 jeweils in einem geschlossenen Betriebszustand oder Sperrstellung gezeigt sind. Diese Betriebszustände oder Stellungen werden im Folgenden auch als Grundstellung bezeichnet.

Bei dem in Fig. 1 dargestellten Betriebszustand des Bremskreises I. besteht aufgrund des geöffneten Betriebszustandes des Ventils 71 eine hydraulische Verbindung zwischen dem Hauptzylinder 12 und den Radbremsen 50 und 60. Dieser Betriebszustand wird für über Betätigungen des Pedals 13 steuerbare Bremsvorgänge, die auch als Normalbremsvorgänge bezeichnet werden können, verwendet. Betätigungen des Hauptzylinders 12 mittels des Pedals 13, optional unter Mitwirkung des Bremskraftverstärkers 14, erzeugen Bremsdrücke in dem Bremskreis I. und damit in den Radbremsen 50 und 60.

Die gezeigte Bremsanlage ist für eine sogenannte Antiblockierregelung ausgelegt, bei der während eines Bremsvorgangs ein Blockieren der Räder verhindert werden soll. Hierfür werden in den Radbremsen 50 und 60 wirkenden Bremsdrücke individuell moduliert. Dies geschieht durch Einstellen in zeitlicher Folge wechselnder Druckaufbau-, Druckhalte- und Druckabbauphasen, die im Folgenden detaillierter erläutert sind.

Die Druckaufbau-, -halte- und -abbauphasen werden durch geeignete Steuerung der den Radbremsen 50 und 60 zugeordneten Ventile 51, 52 bzw. 61, 62 mittels einer elektronischen Steuerung ECU erreicht.

Die elektronische Steuerung ECU kann über eine Reihe von nicht dargestellten Eingängen Betriebszustände eines Fahrzeugs angebende Signale empfangen. Beispielsweise ist es vorgesehen, der elektronischen Steuerung ECU Signale von Raddrehzahlsensoren, Giergeschwindigkeitssensoren, Querbeschleunigungssensoren etc. zuzuführen.

Die elektronische Steuerung ECU weist Ausgänge für Steuersignale a, ... , g zur Steuerung der Ventile 51, 52, 61, 62, 71, und 72 sowie zur Steuerung eines zum Betrieb einer Pumpe 31 vorgesehenen Motors 32 auf.

Bei einem fahrergesteuerten normalen Bremsvorgang mit Antiblockierregelung erfolgt die Steuerung durch die elektronische Steuerung ECU in Abhängigkeit von Betriebszustände des Fahrzeugs angebenden Messgrößen (z. B. Geschwindigkeit, Beschleunigung, Raddrehzahlen, Giergeschwindigkeit, Querbeschleunigung etc.) und Messgrößen, die einen durch den Fahrer gewünschten Bremsvorgang angeben (z. B. Betätigung des Pedals 13, Hydraulikdruck am Ausgang des Hauptzylinders 12 etc.). Der vom Fahrer gewünschte Bremsvorgang kann auch über den im Hauptzylinder 12 erzeugten Bremsdruck P ermittelt werden, für dessen Erfassung ein Sensor 41 vorgesehen ist.

Während eines normalen Bremsvorgangs ohne Antiblockierregelung befinden sich die Ventile 51, 52 und 61, 62 jeweils in ihren Grundstellungen. Stellt die elektronische Steuerung ECU beispielsweise fest, dass den Radbremsen 50 und 60 zugeordnete Rädern zum Blockieren neigen oder blockieren, bewirkt die elektronische Steuerung ECU für die Radbremsen 50 und 60 jeweils eine Druckhaltephase. Führen die Druckhaltephasen nicht dazu, dass die Blockierneigung bzw. das Blockieren endet, bewirkt die elektronische Steuerung ECU für die Radbremsen 50 und 60 jeweils eine Druckabbauphase so lange bis die Blockierneigung bzw. das Blockieren beendet ist. Danach folgen unter Steuerung der elektronischen Steuerung ECU Druckaufbauphasen für die Radbremsen 50 und 60, in denen die in den Radbremsen 50 und 60 wirkenden Bremsdrücke gemäß dem vom Fahrer gewünschten Bremsvorgang aufgebaut werden.

Während der Druckhaltephasen werden unter Steuerung der elektronischen Steuerung ECU die Ventile 51 und 61 jeweils in eine geschlossene Betriebsposition oder Sperrstellung gebracht. Die Ventile 52 und 62 bleiben dabei in ihren beim normalen Bremsvorgang vorliegenden Grundstellungen.

Das Schließen der Ventile 51 und 61 führt zu einer hydraulischen Abkopplung der Radbremsen 50 und 60, wodurch die in den Radbremsen 50 und 60 wirkenden Bremsdrücke konstant gehalten werden.

Während der Druckabbauphasen werden die Ventile 51 und 61 in ihren geschlossenen Betriebspositionen gehalten und die Ventile 52 und 62 von der elektronischen Steuerung ECU so angesteuert, dass sie jeweils einen geöffneten Betriebszustand oder Durchflussstellung annehmen. Aufgrund der geöffneten Ventile 52 und 62 kann Hydraulikfluid aus den Radbremsen 50 und 60 abfließen, wodurch die in den Radbremsen 50 und 60 wirkenden Bremsdrücke verringert werden. Dabei abfließendes Hydraulikfluid kann in einem Niederdruckspeicher 21 zwischengespeichert werden.

Während einer Druckaufbauphase nehmen die Ventile 51, 52 und 61 und 62 ihre Grundsstellungen ein, dass heißt die Ventile 51 und 61 werden durch die elektronische Steuerung ECU geöffnet, während die Ventile 52 und 62 geschlossen werden. Zur Erhöhung der in den Druckabbauphasen verringerten Bremsdrücken in den Radbremsen 50 und 60 steuert die elektronische Steuerung ECU den Motor 32 und damit die Pumpe 31 so an, dass über die Ventile 51 und 61 die in den Radbremsen 50 und 60 wirkenden Bremsdrücke auf dem vom Fahrer gewünschten Bremsvorgang entsprechende Niveaus erhöht werden. Dabei fördert die Pumpe 31 in den Druckabbauphasen abgeflossenes Hydraulikfluid, gegebenenfalls aus dem Niederdruckspeicher 21, zurück.

Die z. B. als Radialkolbenpumpe ausgeführte Pumpe 31 ist entgegen ihrer Förderrichtung sperrend, beispielsweise mittels eines Sperrventils 33 am Ausgang der Pumpe 31 und eines Sperrventils 34 am Eingang der Pumpe 31.

Die Drehzahl des Elektromotors 32 ist über das Steuersignal c der elektronischen Steuerung ECU einstell- bzw. regelbar, wodurch die Fördermenge der Pumpe 31 gesteuert werden kann. Der Elektromotor 32 kann gleichzeitig eine hier nicht gezeigte Pumpe des zweiten Bremskreises II. betätigen.

Bei dem Bremssystem gemäß Fig. 1 ist es möglich, dass bei einem vom Fahrer gesteuerten Bremsvorgang, bei dem Hydraulikfluid im Hauptzylinder 12 durch Betätigung des Pedals 13 unter Druck gesetzt wird, Hydraulikfluid in dem Hauptzylinder 12 bei Durchführung einer Antiblockierregelung in Schwingung versetzt wird. Die dabei möglicherweise entstehenden Geräusche und durch Rückwirkung von Hydraulikfluid in dem Hauptzylinder 12 auf das Pedal 13 entstehenden pulsierenden Bewegungen des Pedals 13 können für den Fahrer unangenehm und irritierend sein und zu unerwünschten Fahrerreaktionen bzw. daraus resultierenden kritischen Fahrzuständen führen.

Die Ursache hierfür kann darin gesehen werden, dass während einer Druckaufbauphase bei Durchführung einer Antiblockierregelung von der Pumpe 31 gefördertes Hydraulikfluid teilweise zu dem Hauptzylinder 12 strömen kann. Ein solcher Fluss von Hydraulikfluid zu dem Hauptzylinder 12 kann Kräfte erzeugen, die vom Fahrer erzeugten Kräften, die über das Pedal 13 auf Hydraulikfluid in dem Hauptzylinder 12 ausgeübt werden, entgegengesetzt sind bzw. diese überlagern.

Zur Lösung dieses Problems ist es erfindungsgemäß im Allgemeinen vorgesehen, während einer Druckaufbauphase einer Antiblockierregelung unter Verwendung der Pumpe 31 nicht mehr Hydraulikfluid zu fördern, als es erforderlich ist, um die während einer vorherigen Druckabbauphase von den Radbremsen abgeführte Menge an Hydraulikfluid wieder zuzuführen. Insbesondere ist es vorgesehen, während einer Druckaufbauphase bei Antiblockierregelung mit der Pumpe 31 im Wesentlichen genau die Menge an Hydraulikfluid zu fördern, die in den Radbremsen Drücke erzeugt, die die vom Fahrer gewünschte, mittels des Pedals 13 vorgegebene Bremswirkung bereitstellen, aber nicht mehr.

Insbesondere wird die Förderung der Pumpe 31 während Druckaufbauphasen bei Antiblockierregelung so gesteuert, dass im Wesentlichen keine von der Pumpe 31 geförderte Menge an Hydraulikfluid "überschüssig" ist, die von der Ausgangsseite der Pumpe 31 zu dem Hauptzylinder 12 strömen kann. Dies kann durch eine entsprechende Steuerung des Elektromotors 32 durch die Steuerung ECU erreicht werden, indem beispielsweise die Drehzahl des Motors 32 eingestellt und/ oder geregelt wird, um die Pumpe 31 zu einer Förderung einer solchen Menge an Hydraulikfluid zu betreiben.

Indem verhindert wird, dass von der Pumpe 31 gefördertes Hydraulikfluid während einer Druckaufbauphase zu dem Hauptzylinder zu strömen vermag, werden die oben genannten Probleme vermieden. Ein zusätzlicher Vorteil ist darin zu sehen, dass in dem Druckspeicher 21 Hydraulikfluid derart bevorratet sein kann, dass die Pumpe 31, insbesondere bei länger andauernder Antiblockierregelung, geräuscharm betrieben werden kann.

Bezugnehmend auf Fig. 2 sind im Folgenden bevorzugte Ausführungsformen beschrieben, wobei der Einfachheit halber nur auf den Bremskreis I. verwiesen wird. Es versteht sich, dass die folgenden Ausführungen entsprechend auch für den Bremskreis II. gelten.

Fig. 2 zeigt die Bremsanlage in einem Betriebszustand, in dem durch eine Betätigung des Pedals 13, optional mit Unterstützung des Bremskraftverstärkers 14, Bremsdruck in dem Hauptzylinder 12 aufgebaut wird. In diesem Betriebszustand für einen durch einen Fahrer gesteuerten Bremsvorgang ist das Ventil 71 geöffnet, um eine hydraulische Verbindung zwischen dem Hauptzylinder 12 und den Radbremsen 50 und 60 herzustellen. Diese hydraulische Verbindung sorgt auch für eine Fluidverbindung zwischen der Ausgangsseite der Pumpe 31 und dem Hauptzylinder 12. Das Ventil 72 ist geschlossen, um einen Fluss von Hydraulikfluid von den Ausgangsseiten der Radbremsen 50 und 60 zu dem Hauptzylinder 12 zu verhindern.

Wie oben ausgeführt, führt die Bremsanlage eine Antiblockierregelung durch, wenn für wenigstens eine der Radbremsen 50 und 60 bzw. diesen zugeordneten Rädern ein Blockieren oder eine Blockierneigung erkannt wird. Wie ebenfalls zuvor ausgeführt, erfolgt die Antiblockierregelung durch in zeitlicher Folge wechselnde Druckaufbau-, Druckhalte- und Druckabbauphasen.

Fig. 2 zeigt die Bremsanlage in einem Betriebszustand, bei dem bei Durchführung einer Antiblockierregelung eine Druckaufbauphase für die Radbremse 50 vorliegt. Zum Druckaufbau für die Radbremse 50 ist das Ventil 51 geöffnet, um von der Pumpe 31 gefördertes Hydraulikfluid der Radbremse 50 über deren Eingangsseite zuzuführen. Um einen Fluss von Hydraulikfluid von der Radbremse 50 an deren Ausgangsseite in Richtung zu der Eingangsseite der Pumpe 31 zu verhindern, ist das Ventil 52 geschlossen.

An der Ausgangsseite der Pumpe 31 an der mit dem Bezugszeichen A bezeichneten Stelle der Bremsanlage ergibt sich folgendes Verhältnis für Hydraulikfluid:

$$Q\text{-}31 = Q\text{-}12 + Q\text{-}51 + Q\text{-}61$$

Dabei gibt Q-31 die von der Pumpe 31 geförderte Menge an Hydraulikfluid an, gibt Q-12 die Menge an Hydraulikfluid an, die von der Ausgangsseite der Pumpe 31 zu dem Hauptzylinder 12 strömt, gibt Q-51 die von der Ausgangsseite der Pumpe 31 zu der Radbremse 50 strömende Menge an Hydraulikfluid an und gibt Q-61 die Menge an Hydraulikfluid an, die von der Pumpe 31 zu der Radbremse 60 befördert wird.

Bei dem in Fig. 2 dargestellten Betriebszustand wird für die Radbremse 60 eine Druckabbauphase durchgeführt, wofür das Ventil 61 geschlossen und das Ventil 62 geöffnet sind. Dementsprechend führt die Pumpe 31 der Radbremse 60 kein Hydraulikfluid zu, d. h. Q-61 = 0. Dies gilt auch für einen nicht dargestellten Betriebszustand der Bremsanlage, in dem für die Radbremse 60 eine Druckhaltephase durchgeführt wird, in der die Ventile 61 und 62 geschlossen sind.

Um zu verhindern, dass während der Druckaufbauphase für die Radbremse 50 von der Pumpe 31 gefördertes Hydraulikfluid zu dem Hauptzylinder 12 fließt, also Q-12 = 0, wird die Pumpe 31 über eine entsprechende Steuerung des Motors 32 so betrieben, dass die von der Pumpe 31 geförderte Menge Q-31 an Hydraulikfluid der Hydraulikfluidmenge Q-51 entspricht (Q-31 = Q-51). Die Menge Q-31 der Pumpe 31 sorgt also für die Menge an Hydraulikfluid, die zum (erneuten) Druckaufbau in der Radbremse 50 auf einen Druck entspricht, der einer durch Betätigung des Pedals 13 vorgegebenen, vom Fahrer erwünschten Bremswirkung entspricht.

Um die Menge Q-31 an von der Pumpe 31 zu förderndem Hydraulikfluid zu ermitteln, kann die Steuerung ECU beispielsweise bei einer Antiblockierregelung verwendete Algorithmen, Kenngrößen, Parameter der Bremsanlage heranziehen, wie zum Beispiel Abmessungen von Hydraulikfluid führenden Komponenten (z.B. Fluidleitungen, Ventilen, etc.) und Aufnahmekapazitäten oder Volumenaufnahmen der Radbremsen.

Die obigen Ausführungen hinsichtlich der Radbremse 50 gelten entsprechend für eine Druckaufbauphase für die Radbremse 60 bei Antiblockierregelung, wenn für die Radbremse 50 eine Druckabbauphase oder eine Druckhaltephase durchgeführt wird. Dementsprechend wird die Pumpe 31 so betrieben, dass deren Fördermenge Q-31 der der Radbremse 60 zuzuführenden Menge Q-61 an Hydraulikfluid entspricht (Q-31 = Q-61), da der Radbremse 50 kein Hydraulikfluid zugeführt wird (Q-51 = 0).

Werden für beide Radbremsen 50 und 60 Druckaufbauphasen während einer Antiblockierregelung durchgeführt, wird die Pumpe 31 so gesteuert, dass deren Fördermenge Q-31 an Hydraulikfluid der Summe der den Radbremsen 50 und 60 zuzuführenden Hydraulikfluidmengen entspricht (Q-31 = Q-51 + Q-61).

Werden für beide Radbremsen 50 und 60 während einer Antiblockierregelung keine Druckaufbauphasen, sondern Druckhaltephasen und/oder Druckabbauphasen durchgeführt, wird die Pumpe 31 so gesteuert, dass sie kein Hydraulikfluid fördert (Q-31 = 0).

Die oben Ausführungen hinsichtlich des Bremskreises I. gelten entsprechend für den Bremskreis II. Wenn der Motor 32 sowohl zum Betrieb der Pumpe 31 des Bremskreises I. als auch einer entsprechenden Pumpe des Bremskreises II. dient, kann ebenfalls im Wesentlichen verhindert werden, dass bei Druckaufbauphasen während einer Antiblockierregelung von den Pumpen gefördertes Hydraulikfluid zu dem Hauptzylinder 12 strömt.

Dabei ist es vorgesehen, dass die Steuerung ECU für den Bremskreis I. eine von der Pumpe 31 zu fördernde Menge Q-31-I ein Hydraulikfluid und für den Bremskreis II. eine von dessen Pumpe zu fördernde Menge Q-31-II an Hydraulikfluid ermittelt. Ausgehend von den Fördermengen Q-31-I und Q-31-II ermittelt dann die Steuerung ECU, wie der Motor 32 zu steuern ist, um die Pumpen der Bremskreise I. und II. so zu betreiben, dass ein Fluss von von den Pumpen gefördertem Hydraulikfluid zu dem Hauptzylinder 12 im Wesentlichen verhindert wird. Dabei kann die Steuerung ECU beispielsweise eine gemeinsame, mittlere Menge Q-31-M ermitteln, die dem Mittelwert der Mengen Q-31-I und Q-31-II entspricht (Q-31-M = (Q-31-I + Q-31-II) / 2) der Motor 32 wird dann von der Steuerung ECU so gesteuert, dass beide Pumpen die gemeinsame, mittlere Menge Q-31-M fördern. Bei der hier angenommenen gemeinsamen Menge Q-31-M wird zumindest für den Bremskreis ein Fluss des von einer Pumpe geförderten Hydraulikfluids zu dem Hauptzylinder 12 verhindert, für dessen Pumpe eine individuelle Fördermenge (Q-31-I oder Q-31-II) ermittelt wurde, die größer als die gemeinsame Menge Q-31-M ist.

**Patentansprüche**

1.  Hydraulische Bremsanlage für ein Landfahrzeug, mit

    - einer Steuerung (ECU), die eingerichtet ist, Steuersignale (a, ..., g) zum Betrieb der Bremsanlage für eine Antiblockierregelung bereitzustellen,
    - einem Hauptzylinder (12) zum Erzeugen von Bremsdruck unter Steuerung eines Fahrers,
    - einem ersten Bremskreis (I.) und einem zweiten Bremskreis (II.) mit

        -- jeweils wenigstens einer Radbremse (50, 60), und
        -- einer ersten steuerbaren Pumpe zur gesteuerten Zufuhr von Hydraulikfluid zu der wenigstens einen Radbremse (50, 60) des ersten Bremskreises (I.) und
        -- einer zweiten steuerbaren Pumpe zur gesteuerten Zufuhr von Hydraulikfluid zu der wenigstens einen Radbremse (50, 60) des zweiten Bremskreises (II.),

    - einer ersten Fluidverbindung zwischen der Ausgangsseite der ersten Pumpe (31) und dem Hauptzylinder (12), und
    - einer zweiten Fluidverbindung zwischen der Ausgangsseite der zweiten Pumpe (31) und dem Hauptzylinder (12), bei der
    - die Steuerung (ECU) eingerichtet ist, eine erste Hydraulikfluidmenge zur Begrenzung einer von der ersten Pumpe für eine Druckaufbauphase bei Antiblockierregelung zu fördernden Menge an Hydraulikfluid zu ermitteln, die einen Fluss von Hydraulikfluid von der Ausgangsseite der ersten Pumpe über die erste Fluidverbindung zu dem Hauptzylinder (12) im Wesentlichen verhindert,
    - die Steuerung (ECU) eingerichtet ist, eine zweite Hydraulikfluidmenge zur Begrenzung einer von der zweiten Pumpe für eine Druckaufbauphase bei Antiblockierregelung zu fördernden Menge an Hydraulikfluid zu ermitteln, die einen Fluss von Hydraulikfluid von der Ausgangsseite der zweiten Pumpe über die zweite Fluidverbindung zu dem Hauptzylinder (12) im Wesentlichen verhindert,

    **dadurch gekennzeichnet, dass**

    - die Steuerung (ECU) dazu eingerichtet ist, eine gemeinsame Hydraulikfluidmenge durch Mitteln der ersten Hydraulikfluidmenge und der zweiten Hydraulikfluidmenge zu ermitteln, die für wenigstens einen der ersten und zweiten Bremskreise (I., II.) einen Fluss von Hydraulikfluid von der Ausgangsseite der entsprechenden Pumpe (31) über die jeweilige Fluidverbindung zu dem Hauptzylinder (12) im Wesentlichen verhindert,
    - ein Motor (32) zum Antrieb der ersten und der zweiten Pumpe (31) vorgesehen ist, und
    - die Steuerung (ECU) eingerichtet ist, Steuersignale für den Motor (32) bereitzustellen, um die von der ersten und der zweiten Pumpe (31) jeweils geförderte Menge an Hydraulikfluid auf die gemeinsame Hydraulikfluidmenge zu begrenzen.

2.  Bremsanlage nach Anspruch 1, bei der die Steuerung (ECU) eingerichtet ist, die wenigstens eine Hydraulikfluidmenge basierend auf wenigstens einem der folgenden Parameter zu ermitteln:

    - wenigstens ein Strömungsquerschnitt des entsprechenden Bremskreises (I., II.), und
    - eine Aufnahmekapazität der wenigstens einen Radbremse (50, 60) des entsprechenden Bremskreises (I., II.) für Hydraulikfluid.

3.  Bremsanlage nach einem der vorherigen Ansprüche, bei der die Steuerung (ECU) eingerichtet ist, Steuersignale bereitzustellen, um während wenigstens einer Druckhaltephase und einer Druckabbauphase bei Antiblockierregelung eine Zufuhr von Hydraulikfluid mittels der wenigstens einen Pumpe (31) zu verhindern.

4.  Verfahren zum Steuern einer hydraulischen Bremsanlage mit Antiblockierregelung für ein Landfahrzeug, die einen Hauptzylinder (12) zum Erzeugen von Bremsdruck unter Steuerung eines Fahrers und einen ersten Bremskreis (I.) mit wenigstens einer Radbremse (50, 60), und einen zweiten Bremskreis (II.) mit wenigstens einer Radbremse (50, 60) umfasst, mit folgenden Schritten:

    - Durchführen einer Antiblockierregelung mittels der Bremsanlage während eines von einem Fahrer gesteuerten Bremsvorgangs, und

- Ermitteln einer ersten Hydraulikfluidmenge, die eine während einer Druckaufbauphase bei Antiblockierregelung zu der wenigstens einen Radbremse (50, 60) des ersten Bremskreises (I.) zu fördernde Menge an Hydraulikfluid so festlegt, dass ein Fluss von Hydraulikfluid von dem ersten Bremskreis (I.) zu dem Hauptzylinder (12) im Wesentlichen verhindert wird

- Ermitteln einer zweiten Hydraulikfluidmenge, die eine während einer Druckaufbauphase bei Antiblockierregelung zu der wenigstens einen Radbremse (50, 60) des zweiten Bremskreises (II.) zu fördernde Menge an Hydraulikfluid so festlegt, dass ein Fluss von Hydraulikfluid von dem zweiten Bremskreis (I.) zu dem Hauptzylinder (12) im Wesentlichen verhindert wird,

- Ermitteln basierend auf der ersten Hydraulikfluidmenge und der zweiten Hydraulikfluidmenge einer gemeinsamen Hydraulikfluidmenge durch Mitteln der ersten Hydraulikfluidmenge und der zweiten Hydraulikfluidmenge, die einen Fluss von Hydraulikfluid von wenigstens einem der ersten und zweiten Bremskreise (I., II.) zu dem Hauptzylinder (12) im Wesentlichen verhindert,

- Zuführen der gemeinsamen Hydraulikfluidmenge jeweils zu der wenigstens einen Radbremse (50, 60) des ersten Bremskreises (I.) und der wenigstens einen Radbremse (50, 60) des zweiten Bremskreises (II.) während einer Druckaufbauphase bei Antiblokkierregelung.

## Claims

1. Hydraulic brake system for a land craft, with

    - a control unit (ECU) which is adapted to provide control signals (a, ..., g) for operating the brake system for antilock braking,
    - a master cylinder (12) for generating brake pressure under the control of a driver,
    - a first brake circuit (I.) and a second brake circuit (II.) with

        -- at least one wheel brake (50, 60) in each case, and
        -- a first controllable pump for supplying hydraulic fluid in a controlled manner to the at least one wheel brake (50, 60) of the first brake circuit (I.) and
        -- a second controllable pump for supplying hydraulic fluid in a controlled manner to the at least one wheel brake (50, 60) of the second brake circuit (II.),

    - a first fluid connection between the outlet side of the first pump (31) and the master cylinder (12), and
    - a second fluid connection between the outlet side of the second pump (31) and the master cylinder (12), in which
    - the control unit (ECU) is adapted to establish a first hydraulic fluid quantity for limiting a quantity of hydraulic fluid to be delivered by the first pump for a pressure build-up phase in antilock braking mode which substantially prevents a flow of hydraulic fluid from the outlet side of the first pump via the first fluid connection to the master cylinder (12),
    - the control unit (ECU) is adapted to establish a second hydraulic fluid quantity for limiting a quantity of hydraulic fluid to be delivered by the second pump for a pressure build-up phase in antilock braking mode which substantially prevents a flow of hydraulic fluid from the outlet side of the second pump via the second fluid connection to the master cylinder (12),

**characterised in that**

    - the control unit (ECU) is adapted to establish, by averaging the first hydraulic fluid quantity and the second hydraulic fluid quantity, a common hydraulic fluid quantity which, for at least one of the first and second brake circuits (I., II.), substantially prevents a flow of hydraulic fluid from the outlet side of the corresponding pump (31) via the respective fluid connection to the master cylinder (12),
    - a motor (32) is provided for driving the first and the second pump (31), and
    - the control unit (ECU) is adapted to provide control signals for the motor (32) in order to limit the quantity of hydraulic fluid in each case delivered by the first and the second pump (31) to the common hydraulic fluid quantity.

2. Brake system according to claim 1, in which the control unit (ECU) is adapted to establish the at least one hydraulic fluid quantity on the basis of at least one of the following parameters:

    - at least one flow cross section of the corresponding brake circuit (I., II.), and
    - a receiving capacity of the at least one wheel brake (50, 60) of the corresponding brake circuit (I., II.) for hydraulic fluid.

3. Brake system according to any one of the preceding claims, in which the control unit (ECU) is adapted to provide control signals in order to prevent hydraulic fluid from being supplied by means of the at least one pump (31) during at least one pressure maintaining phase and one pressure reduction phase in antilock braking mode.

4. Method for controlling a hydraulic brake system with antilock braking for a land craft, which system comprises a master cylinder (12) for generating brake pressure under the control of a driver and a first brake circuit (I.) with at least one wheel brake (50, 60), and a second brake circuit (II.) with at least one wheel brake (50, 60), comprising the following steps:

- carrying out antilock braking by means of the brake system during a braking action controlled by the driver, and
- establishing a first hydraulic fluid quantity which determines a quantity of hydraulic fluid to be delivered to the at least one wheel brake (50, 60) of the first brake circuit (I.) during a pressure build-up phase in antilock braking mode so that a flow of hydraulic fluid from the first brake circuit (I.) to the master cylinder (12) is substantially prevented,
- establishing a second hydraulic fluid quantity which determines a quantity of hydraulic fluid to be delivered to the at least one wheel brake (50, 60) of the second brake circuit (II.) during a pressure build-up phase in antilock braking mode so that a flow of hydraulic fluid from the second brake circuit (II.) to the master cylinder (12) is substantially prevented,
- establishing, on the basis of the first hydraulic fluid quantity and the second hydraulic fluid quantity, by averaging the first hydraulic fluid quantity and the second hydraulic fluid quantity, a common hydraulic fluid quantity which substantially prevents a flow of hydraulic fluid from at least one of the first and second brake circuits (I., II.) to the master cylinder (12),
- supplying the common hydraulic fluid quantity in each case to the at least one wheel brake (50, 60) of the first brake circuit (I.) and the at least one wheel brake (50, 60) of the second brake circuit (II.) during a pressure build-up phase in antilock braking mode.

**Revendications**

1. Système de freinage hydraulique pour véhicule terrestre, comprenant

- une commande (ECU) conçue pour fournir, pour une régulation antiblocage, des signaux de commande (a, ..., g) pour faire fonctionner le système de freinage,
- un maître-cylindre (12) servant à produire une pression de freinage quand le conducteur appuie sur la pédale,
- un premier circuit de freinage (I.) et un deuxième circuit de freinage (II.) comportant

-- chacun au moins un frein de roue (50, 60), et
-- une première pompe pouvant être commandée pour l'alimentation contrôlée en fluide hydraulique dudit frein de roue (50, 60) du premier circuit de freinage (I.) et
-- une deuxième pompe pouvant être commandée pour l'alimentation contrôlée en fluide hydraulique dudit frein de roue (50, 60) du deuxième circuit de freinage (II.),

- une première liaison fluidique entre le côté sortie de la première pompe (31) et le maître-cylindre (12), et
- une deuxième liaison fluidique entre le côté sortie de la deuxième pompe (31) et le maître-cylindre (12), dans le cadre de laquelle
- la commande (ECU) est conçue pour déterminer une première quantité de fluide hydraulique en vue de limiter la quantité de fluide hydraulique à acheminer par la première pompe pour la phase d'établissement de la pression lors de la régulation antiblocage, de manière à ce que sensiblement aucun fluide hydraulique ne puisse s'écouler à partir du côté sortie de la première pompe jusqu'au maître-cylindre (12) via la première liaison fluidique, et
- la commande (ECU) est conçue pour déterminer une deuxième quantité de fluide hydraulique en vue de limiter la quantité de fluide hydraulique à acheminer par la deuxième pompe pour la phase d'établissement de la pression lors de la régulation antiblocage, de manière à ce que sensiblement aucun fluide hydraulique ne puisse s'écouler à partir du côté sortie de la deuxième pompe jusqu'au maître-cylindre (12) via la deuxième liaison fluidique,

**caractérisé en ce que**

- la commande (ECU) est conçue pour déterminer une quantité de fluide hydraulique commune calculée à partir de la moyenne entre la première et la deuxième quantité de fluide hydraulique de manière à ce que, pour au moins un des premier et deuxième circuits de freinage (I., II.), sensiblement aucun fluide hydraulique ne puisse s'écouler à partir du côté sortie de la pompe (31) correspondante jusqu'au maître-cylindre (12) via la liaison fluidique correspondante,
- un moteur (32) est prévu pour entraîner la première et la deuxième pompe (31), et
- la commande (ECU) est conçue pour fournir des signaux de commande destinés au moteur (32) de manière à limiter à la quantité de fluide hydraulique commune la quantité de fluide hydraulique acheminée respectivement par la première et la deuxième pompe (31).

**2.** Système de freinage hydraulique selon la revendication 1, dans le cadre duquel la commande (ECU) est conçue pour déterminer la quantité de fluide hydraulique sur la base d'au moins un des paramètres suivants :

- au moins une section d'écoulement du circuit de freinage (I., II.) correspondant, et
- une capacité d'un frein de roue (50, 60) du circuit de freinage (I., II.) correspondant pour fluide hydraulique.

**3.** Système de freinage hydraulique selon l'une des revendications précédentes, dans le cadre de laquelle la commande (ECU) est conçue pour fournir des signaux de commande pour empêcher l'alimentation en fluide hydraulique via la pompe (31) pendant au moins une phase de maintien et une phase de diminution de la pression lors de la régulation antiblocage.

**4.** Procédé pour commander un système de freinage hydraulique pour véhicule terrestre équipé d'une régulation antiblocage et comprenant un maître-cylindre (12) servant à produire une pression de freinage quand le conducteur appuie sur la pédale, un premier circuit de freinage (I.) avec au moins un frein de roue (50, 60) et un deuxième circuit de freinage (II.) avec au moins un frein de roue (50, 60), comportant les étapes suivantes :

- mise en oeuvre d'une régulation antiblocage à l'aide du système de freinage pendant une opération de freinage initiée par le conducteur, et
- détermination d'une première quantité de fluide hydraulique qui, pendant une phase d'établissement de la pression lors d'une régulation antiblocage, détermine la quantité de fluide hydraulique à acheminer vers le frein de roue (50, 60) du premier circuit de freinage (I.) de manière à ce que sensiblement aucun fluide hydraulique ne puisse s'écouler jusqu'au maître-cylindre (12) à partir du premier circuit de freinage (I.),
- détermination d'une deuxième quantité de fluide hydraulique qui, pendant une phase d'établissement de pression lors d'une régulation antiblocage, détermine la quantité de fluide hydraulique à acheminer vers le frein de roue (50, 60) du deuxième circuit de freinage (II.) de manière à ce que sensiblement aucun fluide hydraulique ne puisse s'écouler jusqu'au maître-cylindre (12) à partir du deuxième circuit de freinage (II.),
- détermination sur la base d'une première et d'une deuxième quantité de fluide hydraulique d'une quantité de fluide hydraulique commune calculée à partir de la moyenne entre la première et la deuxième quantité de fluide hydraulique de manière à ce que sensiblement aucun fluide hydraulique ne puisse s'écouler jusqu'au maître-cylindre (12) à partir du premier et du deuxième circuit de freinage (I., II.),
- acheminement de la quantité de fluide hydraulique commune respectivement vers le frein de roue (50, 60) du premier circuit de freinage (I.) et vers le frein de roue (50, 60) du deuxième circuit de freinage (II.) pendant une phase d'établissement de la pression lors d'une régulation antiblocage.

Fig. 1

**Fig. 2**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 03082645 A1
- WO 9105686 A
- DE 3731603 A1